# EUROPEAN PATENT SPECIFICATION

(11) **EP 2 651 237 B1**
(45) Date of publication and mention of the grant of the patent: **26.08.2015**
(21) Application number: 11807810.4
(22) Date of filing: 14.12.2011
(51) Int. Cl.: A23F 5/40

(54) **INSTANT COFFEE**
INSTANTKAFFEE
CAFÉ INSTANTANÉ

(30) Priority: 16.12.2010 GB 201021427
(43) Date of publication of application: 23.10.2013
(73) Proprietor: Kraft Foods R & D, Inc., Deerfield, IL 60015 (US)
(72) Inventor: FISK, Ian Denis, Loughborough Leicestershire LE11 2AQ (GB); IMISON, Tom Philip, Banbury Oxfordshire OX16 4FP (GB); ZELLER, Bary, Glenview Illinois 60025 (US)
(74) Representative: Boult Wade Tennant
(86) International application number: PCT/US2011/064912
(87) International publication number: WO 2012/082897

(56) References cited:
- EP-A1- 0 928 561
- EP-A1- 2 100 514
- WO-A1-2010/116138
- DE-U1-202010 017 387
- US-A1- 2011 183 048

## Description

This disclosure relates to an improved instant coffee composition. In particular, an instant espresso coffee that gives rise to a more authentic beverage product than conventional instant coffees. The disclosure also relates to a method of manufacturing the coffee composition.

It is well known that authentic espresso coffee produced by rapidly brewing ground roasted coffee beans with pressurised water/steam has a characteristic taste and appearance. Espresso coffee is not easily made and requires relatively complicated and expensive equipment, which in turn requires a degree of skill to operate. There has been interest in producing an instant coffee which more closely emulates the characteristics of authentic espresso coffee without the difficulties associated with making authentic espresso coffee.

One known method is to manufacture instant espresso products comprising soluble coffee particles containing gas for producing beverage foam. US2006/0040038 describes a technique for producing a foam from an instant beverage composition. The technique involves heating the coffee under pressure to force gas into internal pores in the coffee. Although such products offer great convenience, they do not provide the consumer with the same beverage and foam quality typically obtained by brewing espresso coffee.

Another way to more closely emulate the taste of an authentic espresso coffee is disclosed in US3261689 which describes a soluble coffee product having a small fraction of ground roasted coffee mixed into the soluble coffee before spray drying. The inclusion of the ground roasted coffee is found to improve the aroma and flavour. US3652292 describes a similar technique.

WO2010/116138 discloses a method of forming an agglomerated foaming coffee composition.

Accordingly, it is desirous to provide an improved instant coffee composition and/or tackle at least some of the problems associated with the prior art or, at least, to provide a commercially useful alternative thereto.

Accordingly, in a first aspect the present disclosure provides an instant coffee composition comprising soluble coffee particles having internal pores, wherein at least some of the internal pores contain a pressurised gas, and wherein the soluble coffee particles are provided with added finely-ground insoluble coffee material on an outer surface thereof, wherein the finely-ground insoluble coffee material has a mean particle size of from 0.1 to 100 micrometers.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature of features indicated as being preferred or advantageous.

By pressurised gas it is meant that the gas is at the pressure greater than atmospheric pressure (101.325kPa).

The term "instant" as used herein with reference to coffee compositions takes its usual meaning in the art and in product marketing. That is, an instant coffee composition is one from which a coffee beverage may be formed on addition of a warm beverage medium, for example, water at from 30 to 100ºC and preferably from 80 to 90ºC. The beverage is thus formed "instantly" by dissolving the coffee composition into the beverage medium. The addition of further ingredients, such as milk, sugar or other flavourings at the same time, before or after adding the beverage medium does not prevent the composition being considered "instant". Instant coffee products are well known and include, by the way of example, "MAXWELL HOUSE® instant coffee granules". The instant coffee may optionally be decaffeinated.

The term *"soluble"* as used herein indicates that the component dissolves completely or substantially completely in a beverage medium. Depending on the beverage selected, the temperature of the beverage medium required will determine whether a component is considered to be soluble and this can be easily determined by experimentation. In principle, if a component completely or substantially completely dissolves in a beverage while it is still at a desirable drinking temperature, then it is a soluble component.

The pressure at which solubility is considered is the pressure at which the beverage is prepared. This will usually be at atmospheric pressure, although some beverage preparation machines will use pressures up to or exceeding 15,000 kPa, more commonly around 3000kpa.

Conversely, the term "insoluble" refers to components which do not dissolve (or do not substantially dissolve) and remain discrete from the beverage medium. Insoluble components include, for example, oil droplets and finely-ground plant matter (such as roast and ground coffee particles) suspended in the beverage or in the foam. Finely-ground plant matter, especially roast and ground coffee particles, are preferably the only insoluble components employed.

Preferably, for example, a beverage, such as coffee, tea or hot chocolate, soluble material dissolves completely or substantially completely in the beverage medium within 5 minutes of addition, preferably within 1 minute, more preferably with 10 seconds and most preferably almost instantly. In the same beverage an insoluble component would preferably not substantially dissolve (or dissolve at all) within 5 minutes, more preferably within 20 minutes and most preferably ever.

It should be recognised that an insoluble or soluble material may contain impurities of small amounts of ingredients that do not share the solubility properties of the bulk material. For example, roast and ground coffee particles are considered insoluble at coffee brewing temperatures. The extraction of the coffee from the particles is not dissolution of the roast and ground coffee particles. Accordingly, the solubility of a component is determined by its bulk properties, i.e. 90% by weight, more preferably 95% by weight and most preferably 99% or higher.

The *"foaming coffee"* of the present disclosure refers to coffees that mimic the foam produced when a water extract of ground roasted coffee is poured into a cup, particularly when an authentic espresso coffee brewed with water is directed into a cup.

By *"an outer surface"* it is meant that the finely-ground insoluble coffee material is present on at least a portion of the surface of the coffee particles that is in contact with the atmosphere. Preferably the material is present only on this surface of the coffee particles and not within the body of the particles. In another less preferred embodiment, the finely-ground insoluble coffee material may also be present within the body of the coffee particles (i.e. buried wholly within the coffee particles).

The finely-ground insoluble coffee material is preferably at least partly fused into the outer surface of the soluble coffee particles. That is, the material is held onto the surface, preferably by being sunk slightly into the surface. This can be achieved, for example, by compression or more preferably by heating the particles to or above their glass transition temperature before or after contacting the particles with the insoluble coffee material.

Alternatively, in a less preferred embodiment, the insoluble material may be attached (or fused) to the surface by using a binder. Such a binder would most likely be a liquid binder such as a sugar solution. Preferably the insoluble material is fused to the coffee particles without the use of a binder, in particular a liquid binder since this avoids a complex processing step.

The foam of an authentic espresso coffee beverage contains colloidal oil droplets and solid substantially insoluble particles which give the espresso coffee its characteristic appearance, texture, and mouthfeel. The foam makes a considerable contribution to the overall appeal of the coffee beverage. The inventors have discovered that the provision of the ground insoluble coffee material on the surface of the instant foaming coffee provides the colloidal particles and/or oil droplets within the beverage foam and/or liquid. This results in an improved and more convincing final beverage. The inventors have also discovered that by coating a foaming instant coffee composition with finely-ground insoluble coffee material it is possible to have a significant amount of this insoluble material entrained into the foam. This produces a highly appealing final foam consistency and taste that was heretofore lacking in instant coffee products.

The finely-ground coffee material added to the instant coffee particles may be any suitable coffee product, precursor, component, or by-product of the roast coffee or soluble coffee process, for example, finely-ground dried exhausted roast and ground coffee by-products from soluble coffee extraction, or pressed roast coffee beans which are finely-ground and optionally dried. Any finely-ground component of native or processed coffee plant, fruit, or seed could be used in the practice of the disclosure. The finely-ground insoluble coffee material is preferably roasted, partially roasted, un-roasted or even an already-extracted waste coffee material. Preferably the finely-ground insoluble coffee material is derived from roast and ground coffee beans which have optionally already been extracted. The use of pre-extracted coffee beans is a very efficient use of an otherwise unwanted waste product.

The term *"finely-ground"* refers to the insoluble coffee material being ground to a size that is fine in comparison to the soluble coffee particles. Preferably the insoluble coffee material is ground to a mean size having a longest diameter of less than 20%, more preferably less than 10%, of the mean longest diameter of the soluble coffee particles.

The finely-ground insoluble coffee material has an average (mean) particle size (longest diameter) of from 0.1 to 100 micrometers, preferably from 5 to 50 micrometers and most preferably from 10 to 25 micrometers. While it is noted that the mean size preferably falls within these ranges, preferably the median and mode (most prevalent) size also falls within the claimed ranges. The fine particle size allows for easy dispersal of the finely-ground insoluble material throughout the beverage and, in particular, it allows for entrainment of the material into the beverage foam. In addition, the finer insoluble coffee particles more closely emulate the particles commonly found in the authentic espresso foams.

An example of a suitable diffraction spectrometer for measuring mean particle size is the Sympatec Helos/LA laser diffraction spectrometer at room temperature (20ºC) and pressure (1 atmosphere). The output data from this spectrometer is provided as a table of size distribution (number vs. size), from which the number-averaged particle size may be calculated.

As noted above, soluble coffees are dried extracts of coffee beans that, when contacted with hot water (for example, water at a temperature of about 60ºC to about 100ºC, for example about 80ºC) dissolves to form a coffee beverage.

Soluble coffee produced by methods known in the art typically comprises particles with a porous structure. That is, the coffee has internal holes or cavities capable of containing a trapped gas. If the pores are on or connected to the surface of the particle they are considered to be open. If the pores are within the interior of the particle and are not connected to the surface of the particle then they are considered to be closed pores. These closed pores are referred to herein as internal pores.

The preferred average (mean) particle size for the soluble coffee powder is from about 100 to about 300 microns. This can be measured by laser diffraction as described herein.

The preferred mean internal (closed) pore diameter is from about 0.5 to about 100 microns, more preferably from about 2 to 80 microns. Most preferably the mean diameter is from about 3 to 15 microns, and most preferably from 4 to 10 microns. Pore size can be estimated by visual inspection of SEM images, or measured quantitatively using x-ray tomography.

The coffee composition is formed by the addition of the finely-ground coffee material to coat instant coffee particles. The ground coffee material can be added before the heated pressurisation treatment that loads the particles with pressurised gas. Alternatively, the finely-ground material can be added after the heated pressurisation treatment, although this may require a step of breaking up the coffee which may have over-agglomerated under the treatment conditions in the absence of the finely-ground coffee material.

In a second aspect the present disclosure provides a method of forming the instant coffee composition as described above, the method comprising:
i) providing a soluble coffee particle having an outer surface;
ii) at least partially coating the outer surface of the soluble coffee particle with a finely-ground insoluble coffee material to form a coated particle, wherein the finely-ground insoluble coffee material has a mean particle size of from 0.1 to 100 micrometers; and
iii) warming the coated particle and subjecting it to a pressurised gas so that at least some of the gas is trapped in internal pores of the particle.

As described in US2006/0040038, the entrapment of pressurised gas within the soluble coffee particles may be achieved by heating the dried soluble coffee particles under sufficient temperature and gas pressure thereby forcing gas into internal pores of the dried soluble coffee particles. The heated dried coffee particles can then be cooled and de-pressurised, resulting in a soluble coffee having internal pores filled with pressurised gas. This process results in a soluble coffee product which releases pressurised gas upon reconstitution with hot water. The release of gas from the soluble coffee particles generates a foam layer on the beverage surface which resembles the foam layer on the aforementioned espresso coffee beverage.

The present inventors have discovered, however, that when the process described in US2006/0040038 is applied on a large scale, the extent of the heating required for pressurised gas entrapment typically leads to undesirable particle agglomeration. The inventors have discovered that if the coffee is heated to a temperature above the glass transition temperature (Tg) of the coffee a greater quantity of pressurised gas can be stably trapped. However, when soluble coffee is heated to a temperature above the Tg, the surfaces of the coffee particles become sticky to the touch and holding at T>Tg for a prolonged period of time causes individual particles to agglomerate together into clusters or aggregates comprised of two or more attached discrete particles. When this process is implemented on a larger scale, as is required to produce commercially-viable quantities of the product, this undesirable particle agglomeration becomes more significant due to the higher gravitational or compressive forces on the particles resulting from a deeper bed, and the typically longer processing times needed to effectively transfer heat energy through the larger volume of coffee particles.

Agglomeration can, under some conditions, cause the product to form large fused or caked particle bodies comprised of numerous attached discrete particles, which no longer resemble a conventional instant coffee product and renders the product unsuitable or undesirable for use as an instant beverage product. Furthermore, a substantial portion of the product can adhere to the walls of the vessel in which the pressurisation process is carried out during the heating step, resulting in an inability to easily remove all of the product after de-pressurisation. The present inventors have discovered that by the addition of a finely-ground insoluble coffee material, preferably a roasted, partially roasted or un-roasted coffee material, to the soluble coffee particles prior to the heated pressurisation treatment used to load the particles with gas for foaming, the problems associated with the prior art can be reduced. This has surprisingly been shown to also beneficially improve certain important finished product beverage and foam quality attributes. That is, the added insoluble coffee material is effective to reduce or eliminate unwanted or excessive particle agglomeration during heated pressurization.

The finely-ground coffee material is effective in coating, or partially coating, the soluble coffee due to its typically much-smaller mean particle size. Without wishing to be bound by scientific theory, it is contemplated that finely-ground coffee materials may act both as physical spacers between the individual soluble coffee particles during heated pressurisation, whilst also absorbing surface moisture from the soluble coffee particles. These two effects, either individually or in combination, are believed to be responsible for providing the observed effective reduction in the degree of particle agglomeration that occurs during the heated pressurisation process. The finely-ground coffee material may also optionally be dried to reduce or eliminate its moisture content or treated to improve its capacity to absorb moisture from the soluble coffee during the pressurisation process. It is believed that by using finely-ground insoluble material, the available surface area of the material improves the soluble coffee drying effect and reduces undesirable over-agglomerisation. Further, the very small particle size of the finely-ground coffee material is also believed to be effective in stabilizing the foam of reconstituted beverages.

In the process according to the present disclosure, it has been demonstrated that the addition of, for example, pressed roast coffee beans which are finely-ground and dried, to soluble coffee, such as spray-dried instant coffee, substantially inhibits the agglomeration of the soluble coffee particles during the heated pressurisation, such that the number of agglomerated particles present in the product is substantially and beneficially reduced and, in addition to this, the fraction of soluble coffee particles adhered to the wall of the pressurisation vessel is also substantially and beneficially reduced.

Furthermore, since the resulting pressurised foaming instant espresso coffee product comprises finely-ground coffee material, the in-cup (beverage) foam generated by the product of the present disclosure can beneficially more closely resemble the foam of an authentic espresso coffee obtained by brewing ground roast coffee in an espresso brewer. Further still, it is contemplated that a substantial portion of the finely-ground coffee material in the product of the present disclosure may be actively transported into the foam of the beverage upon reconstitution caused by gas release from the soluble coffee particles which they surround. It is apparent the rising gas bubbles released by dissolution of the soluble coffee particles in water carry a significant amount of the finely-ground coffee material into the foam. This may slow, or prevent, the finely-ground coffee material from settling out of the liquid phase of the beverage during consumption and from forming an unsightly sediment at the bottom of the cup, as would occur to a faster or greater extent in a simple admixture of soluble coffee and finely-ground coffee material. Further beneficial effects include substantially improved beverage foam stability and a significantly thicker foam mouthfeel, both of which contribute to the more-authentic espresso coffee experience delivered by products of the present disclosure.

Additionally a further advantage of the present disclosure is that the yield of the overall coffee process may be improved, since in certain embodiments of the present disclosure, a process stream that was previously considered a by-product, or to have little or no commercial value, can be used to give a functional benefit to the finished product. The result of this finding can be employed to reduce processing costs and raw material, energy, and waste disposal costs, which for a soluble coffee process can be substantial.

In a further embodiment, the finely-ground coffee material may optionally be treated, for example by dyeing or bleaching, to alter its physical appearance. For example, the finely-ground coffee material may be dyed or bleached to lighten its colour and hence deliver a beverage where the coffee material present in the foam may be beneficially either more or less noticeable to the consumer, and/or may beneficially influence the characteristics of the foam, for example lightening, darkening, or changing the foam colour, or producing other visual effects.

Preferably the soluble coffee particle is provided in a step of spray-drying a coffee concentrate solution. Spray drying has been found to provide a suitable particle surface for adhering the finely-ground insoluble material and provides suitable particle sizes for use in the present method without necessarily requiring an intervening agglomeration step.

Preferably the finely-ground insoluble coffee material is dried before being coated onto the soluble coffee particles. This is believed to increase the efficiency of the insoluble material at reducing or preventing agglomeration or over-agglomeration of the soluble coffee.

Optionally the method further comprises a step of cooling the coated particles and, optionally, packaging the particles.

Preferably the step of warming the coated particles involves heating the coated particles above the glass transition temperature of the soluble coffee particles. This has been found to increase the amount of pressurised gas that can be retained within the instant coffee composition.

It is preferred that the pressurised gas is substantially devoid of oxygen and/or moisture so as to avoid degrading the coffee over time. Preferably, therefore the gas comprises nitrogen. Most preferably the gas is nitrogen with only unavoidable impurities. Other, less preferred food-grade gases, or mixtures thereof can also be used, and these can include for example air, nitrous oxide, carbon dioxide or halogenated hydrocarbons. The gas may be in supercritical or liquefied form during part or all of the pressurisation process, and may also be retained within the instant coffee composition in supercritical or liquefied form. This allows for a greater amount of gas to be held and, as a consequence, a foamier final beverage.

Preferably the pressurised gas is at a pressure of from 1,000kPa to 50,000kPa. More preferably the gas is at a pressure of from 2,000 to 6,000kPa, and most preferably about 4,000kPa. The pressure is at least greater than atmospheric pressure to ensure that some pressurised gas becomes entrapped in the internal pores of the coffee. If a supercritical fluid is used then the pressure is above the critical pressure for at least a part of the pressurisation process. If a liquefied gas is entrapped then the pressure is equal to or greater than the saturated vapour pressure of the fluid at the temperature at which the coffee is stored. A suitable method of pressurisation using supercritical fluid is described in US patent application US20080160139A1, the content of which is incorporated by reference.

In a third aspect the present disclosure provides a method of forming a beverage from the instant coffee composition comprising dissolving the instant coffee composition of the present disclosure in an aqueous beverage medium, preferably a hot beverage medium. The beverage is preferably hot water, but may also include, for example, a hot beverage such as brewed coffee or hot milk.

There is also described the use of a finely-ground insoluble coffee material to reduce the agglomeration of a soluble coffee composition undergoing heated pressurisation treatment. Preferably the finely-ground insoluble coffee material has an average particle size of from 0.1 to 100 micrometers and preferably from 5 to 50 micrometers as described above. The finely-ground insoluble coffee material is preferably used to reduce the agglomeration of a foaming soluble coffee: such coffees are prone to losing their trapped gas when subjected to agglomeration treatment. The use of the finely ground coffee allows for faster agglomeration treatment without forming oversized agglomerates or allowing too much trapped gas to escape.

There is disclosed the use of a finely-ground insoluble coffee material to improve the stability of a foam formed on a coffee beverage. In particular, the insoluble material is that described herein and the application is for those purposes described herein. For example, the use of a finely-ground insoluble coffee material to improve the stability of a foam formed on a coffee beverage made from a soluble coffee composition, wherein the insoluble coffee material is coated on a surface of the soluble coffee composition so that it becomes entrained into the foam when the beverage is formed by the addition of a beverage medium. The finely-ground insoluble coffee material can be used to improve the stability of a foam formed on a coffee beverage as described herein, in particular where the coffee beverage is created upon reconstitution of instant coffee powder or granules with water, and optionally where the coffee beverage further comprises one or more of the following ingredients: milk, sugar, flavourings and whiteners. The finely-ground insoluble coffee material can be used to improve the stability of a foam formed on a coffee beverage, wherein the coffee beverage is created by a beverage dispensing system.

Preferably the finely-ground insoluble coffee material can be used to improve the stability of a foam formed on a coffee beverage from a foaming soluble coffee. The use of the material in combination with the trapped gas has been found to lead to significant entrapment of the material in the overlying foam, leading to enhanced foam stability and foam quality.

In a further aspect the present disclosure provides a container comprising the foaming coffee composition described herein, the container being in the form of a cartridge, sachet, capsule, pod or pad.

In a further aspect the present disclosure provides a beverage dispensing system comprising a container described herein and a beverage dispensing machine adapted to receive the container and to dispense a beverage therefrom by the addition of an aqueous beverage system.

In an further aspect of the present disclosure there is provided a method of making a beverage comprising passing an aqueous beverage medium through the container described herein. Preferably the beverage is made using the beverage dispensing system described herein.

The extent to which a coffee foams can simply be measured with a ruler and determining the relative height of the foam. This technique was used in the Examples included herein. All measurements were carried out by conducting duplicate foam tests and calculating separate averages for the 1 and 10 minute time intervals.

A commercially available freeze-dried coffee measured by this test typically exhibits a foam volume of just 1.5 cm³ after 1 minute, reducing to a foam volume of just 0.5 cm³ after 10 minutes. Thus, a typical soluble coffee shows a retention of from of only 33% after 10 minutes compared to 1 minute.

Foaming coffees also trend to have a higher closed pore volume than conventional coffees. For example, conventional soluble coffee may have a closed pore volume of about 0.05 cm³/g. That is, the total volume of the closed pores within the particles, as described below, is about 0.05cm³ for each gram of the coffee particles. In contrast, the foaming coffees described herein preferably have a closed pore volume of about 0.3 cm³/g or greater, such as 0.5 cm³/g to 3.0 cm³/g, for example 0.75 cm³/g to 1.5 cm³/g, such as about 1.0 cm³/g.

Closed pore volume can be measured by firstly measuring the skeletal density (g/cm³) of the material by measuring the volume of a weighed amount of powder or granules using a helium Pycnometer (Micromeritics AccuPyc 1330) and dividing weight by volume. Skeletal density is a measure of density that includes the volume of any pores present in the particles that are sealed to the atmosphere and excludes the interstitial volume between particles and the volume of any pores present in the particles that are open to the atmosphere. The volume of sealed pores, referred to herein as closed pore volume, is derived from also measuring the skeletal density of the powder or granules after grinding with a mortar and pestle to remove or open all interior (closed) pores to the atmosphere. This type of skeletal density, referred to herein as true density (g/cm³) is the actual density of only the solid matter comprising the powder or granules. Closed pore volume (cm³/g) is determined by subtracting the reciprocal true density (cm³/g) from the reciprocal skeletal density (cm³/g). Optionally the closed pore volume can also be expressed as volume percent of closed pore volume contained in the particles comprising the powder or granules. The percent closed pore volume percent is determined by subtracting the reciprocal true density (cm³/g) from the reciprocal skeletal density (cm³/g) and then multiplying the difference by skeletal density (g/cm³) and 100%.

All measurements herein are measured at room temperature (20°C) and 1 atmospheric pressure unless otherwise stated.

### Figures

The invention will now be described further with reference to the following figures, provided by way of non-limiting examples:
Figure 1 shows a flowchart identifying steps taken in the method described herein, including optional steps.
Figure 2 shows a graph plotting foam height (mm) over time (minutes) for an uncoated instant espresso foam (A) compared to a coated instant espresso foam (B) in accordance with the present disclosure. The method used to measure the foam height in figure 2 was simply measuring the distance between the top of the foam and the foam/liquid interface using a ruler.
Figure 3A shows a scanning electron microscope image of an uncoated instant espresso particle 10. Figure 3B shows a scanning electron microscope image of an instant espresso particle 11 coated in accordance with the present disclosure with a finely-ground coffee material 12.
Figure 4 shows organoleptic results from taste tests performed on the beverage (liquid) and foam of a coffee made with the composition of the present disclosure in comparison to one made with an uncoated foaming instant espresso.

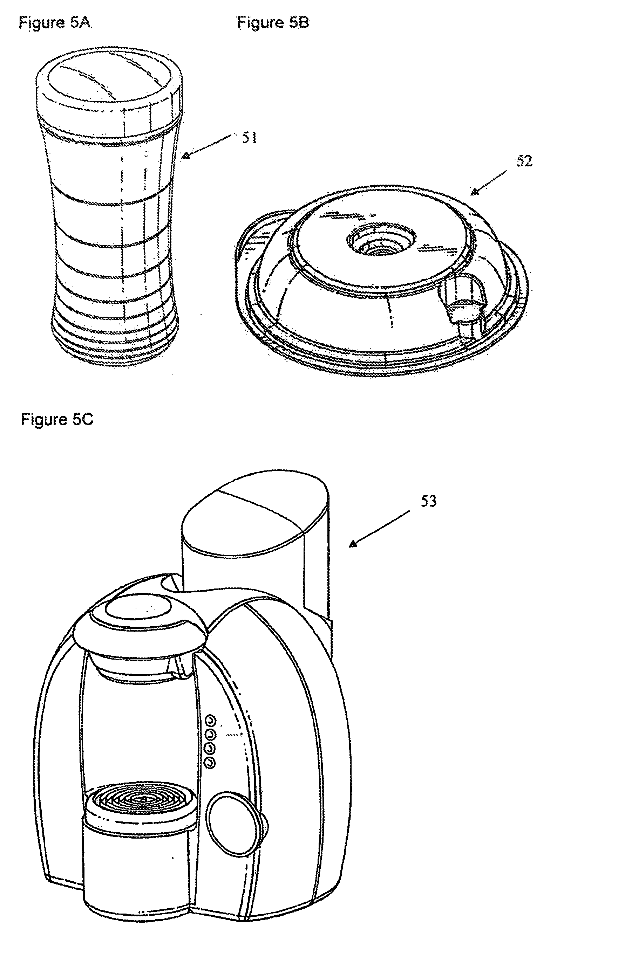

Figure 5A shows a typical coffee package 51 for holding a composition as described herein, such as might be used for retail of a coffee product. Figure 5B shows a cartridge 52 suitable for holding the coffee composition and for use in a beverage producing machine 53. Figure 5C shows a beverage producing machine 53 suitable for use with the cartridge 52 shown in figure 5B.

### Examples

Aspects of the present disclosure will now be described with reference to the following non-limiting examples and with reference to the figures.

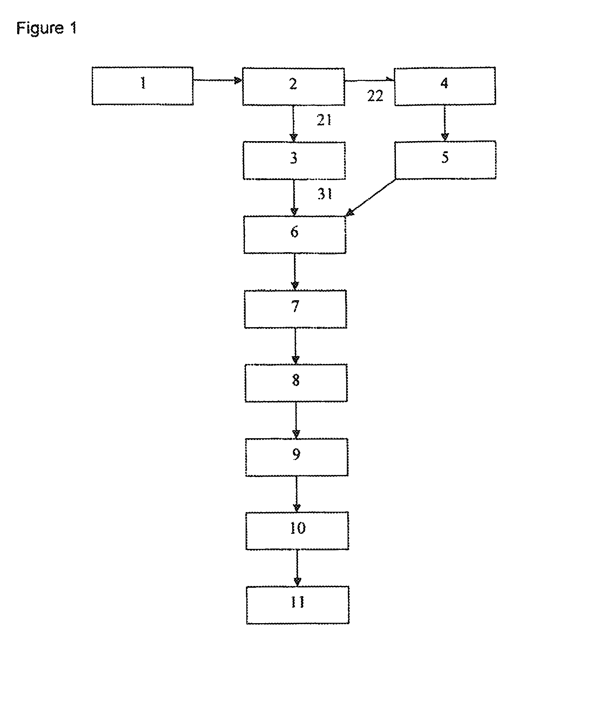

Figure 1 shows a flowchart identifying steps which may be taken in the method of the present disclosure, including optional steps.

A soluble coffee is typically obtained from coffee beans by the following method. Firstly, coffee in the form of coffee beans is provided. Coffee beans (sometimes called coffee cherries) are harvested as the seeds of plants belonging to the plant genus *Coffea.* For example, Arabica coffee is derived from beans from the *Coffea arabica* plant and Robusta coffee is derived from beans of the *Coffea canephora* plant. Other non-limiting types of coffee include Brazilian coffee and coffee derived from the *Coffea liberica* and *Coffea esliaca* plants. There exist many varieties within individual types of coffee, each variety for example indicating the geographical origin of the coffee. Soluble coffee may be derived from any variety or type of coffee or any combination of any varieties and / or types.

Before roasting the coffee, the green coffee beans may be processed. For example, caffeine may be removed from the green coffee beans. Suitable decaffeination processes include treating the beans with a heated coffee extract, direct or indirect decaffeination with a solvent such as water, dichloromethane, ethyl acetate or triglyceride, and extraction using supercritical carbon dioxide. Other treatment steps before roasting may also be carried out, for example treatment to modulate flavour-producing compounds in the green coffee bean.

The green coffee beans are then roasted. Roasting is well known in the art. Typically, it involves heating the green beans until they change colour. Apparatuses suitably used for roasting include ovens and fluidized beds.

The degree of roasting is judged by the colour of the roasted coffee bean. Roasting levels include light roasts (cinnamon, half city, light and New England), medium-light roasts (light American, light city and West coast), medium roasts (American, breakfast, brown, city and medium), medium-dark roasts (full city, light French and Viennese), dark roasts (after dinner, continental, European, French, Italian and New Orleans) and very dark roasts (dark French and heavy).

After roasting, the coffee may be treated, for example to increase (or decrease) its level of hydration. In another example, the coffee may be processed to reflect a unique flavour characteristic such as espresso.

After roasting, the coffee is ground to produce coffee grounds. Grinding methods include burr grinding, chopping, pounding and roller grinding.

A coffee extract is then extracted from the coffee grounds by contacting the coffee grounds with hot water. The coffee extract may then be concentrated, for example from about 15 to about 50% coffee by mass or more. The concentrated extract is then dried by, for example, freeze drying or spray drying. Methods of freeze drying and spray drying are well known in the art. This produces soluble coffee particles.

Before undergoing the pressurisation treatment to introduce pressurised gas into internal pores in the coffee, the freeze- or spray-dried soluble coffee particles may undergo an agglomeration step to obtain a desired large particle size. Methods of agglomerating soluble coffee are known in the art. A typical agglomeration process is described in the Encyclopaedia of Food Science and Technology 1, p. 13-17 (1992). In this accepted agglomeration process, particles of soluble coffee are initially milled to reduce their size. As discussed in Powder Technology 86, p. 49-57 (1996), this milling process is thought to produce particles that are small enough to then form loose associations of particles, sometimes called dry pre-aggregates. These pre-aggregates are thought to be held together by electrostatic forces, caused by, for example, the frictional charging of particles during milling and / or during mixing. Therefore, reducing the particle size before agglomeration is carried out so that individual particles of soluble coffee are capable of a sufficient particle weight to surface charge / surface interaction ratio in order to keep individual particles in contact with one another.

After milling, the milled particles of soluble coffee are then agglomerated. Many different forms of agglomeration are known in the art. For example, as described in Food Control 6, p. 95-100 (1995), agglomeration can be achieved by compacting individual particles, by growth agglomeration or through agglomeration by drying (e.g. spray-drying). In general terms agglomeration refers to processes in which individual particles in a composition combine to form larger particles. Typically, the individual particles making up the larger particles are still identifiable but are held together with the other individual particles in the agglomerate so that the agglomerate remains as a single particle. For example, the individual particles making up the aggregate may be held together by solid bridges. Typically, the tensile strength of these bridges are of the same order of magnitude as that of the individual particles. For example, the breaking strength of the aggregates may be at least about a tenth of the tensile strength of the individual particles, for example about a quarter to about one times the breaking strength of the individual particles.

Typically, agglomeration of soluble coffee is carried out by wet growth agglomeration. This involves exposing the surface of the soluble coffee particles to a binder liquid such as water. The binder liquid may also be provided in its gaseous form, for example as steam as performed in jet agglomeration. When steam is used, the steam can condense to liquid form upon contact with the coffee particles. The liquid binder forms liquid bridges between the individual particles. The liquid binder is then dried to form a solid bridge comprising the solid form of the binder; alternatively or additionally, the liquid binder may dissolve some of the soluble coffee, in which case the solid bridge formed on drying of the binder liquid comprises the soluble coffee itself. It is also possible that, in a process such as jet agglomeration, steam is used simply to soften the surface of the soluble coffee, causing individual soluble coffee particles to adhere to one another.

Examples in which this milling process is followed by agglomeration to form an agglomerated coffee composition include US 3554760 (General Foods Corporation), US 3514300 (Afico S.A.), US 4724620 (Nestec S.A.), US 3227558 (General Foods Corporation), US 4594256 (General Foods Corporation), US 3767419 (General Foods Corporation), US 3716373 (Rhodes), US 3821430 General Foods Corporation), US 3740232 (General Foods Ltd), US 3729327 (General Foods Corporation), US 3695165 (General Foods Corporation) and US 3485637 (General Foods Corporation).

Turning to figure 1, the beans are roasted and ground in a conventional manner (step 1). The roast and ground coffee is then extracted with hot water (step 2) to produce a concentrated coffee solution 21 and an extracted coffee filter cake 22.

The concentrated coffee solution 21 is spray dried (step 3) to produce a number of soluble coffee particles 31. The extracted coffee filter cake 22 is dried (step 4) and ground (step 5) to have a fine particle size (average longest diameter) of approximately 20 micrometers.

The soluble coffee particles are mixed with the finely-ground coffee filter cake under gentle tumbling conditions (step 6).

Once the soluble coffee particles are well coated with the finely-ground coffee filter cake, the coated particles are passed into a pressurised vessel under 40 bars of nitrogen and warmed to above their glass transition temperature (step 7). This traps nitrogen under pressure within the structure.

The coated gas-trapping particles are then allowed to cool (step 8) and are packaged (step 9) into either a bulk container for sale as an instant coffee product or, alternatively, packaged into coffee-producing beverage cartridges for use in a beverage dispensing machine.

A beverage cartridge containing the composition described herein may be used in a beverage machine. Such machines are well known in the art. The system passes hot water through the pod (step 10) to dissolve the composition and, hence, to produce a foamed beverage for consumption (step 11).

### • Example 1 (Comparative)

About 1 kg of spray-dried soluble coffee powder with a moisture content of about 2.1% by weight was loaded into a pressure vessel of about 12 litres internal volume. The coffee powder had an average particle diameter (D₅₀) of about 150µm (measured by laser diffraction), and a bulk density of about 0.22 g/ml. The coffee had a glass transition temperature (Tg) of over 50°C.

The vessel was sealed and filled with nitrogen gas until the internal pressure reached about 40bars gauge. The vessel was then heated using an oil jacket (at a maximum oil temperature of about 105°C) until the temperature of the coffee surpassed its Tg and reached 90°C. The coffee was kept at about 90°C for about 10 minutes, and then cooled to below the coffee Tg by reducing the temperature of the jacket until the temperature of the coffee was below 50°C. The vessel was then de-pressurised and inverted to allow the coffee to flow out into a separate collection pot.

When the vessel was inverted, about 230g of coffee particles and agglomerates flowed out of the vessel and into the collection pot. The remainder (about 770g) of the coffee particles had adhered to the walls of the vessel and could not be easily removed. The 230g of particulate coffee that flowed out of the vessel contained a significant quantity of pressurised gas and generated a beverage foam layer when 3g of the coffee was reconstituted with 200 ml of hot water in a beaker.

### • Example 2

About 850g of the same untreated lot of spray-dried soluble coffee starting material, as used in Example 1, with the same moisture content of about 2.1% by weight was thoroughly mixed with about 150g of pressed roast coffee (expeller cake remaining after hydraulically pressing oil from roasted coffee beans), by combining the two substances together in a polyethylene bag and shaking by hand for about 30 seconds. The pressed roast coffee had been previously jet-milled to an average particle diameter (D₅₀) of about 17µm (measured by laser diffraction), and then dried to a moisture content of about 0.2% by weight.

This mixture of spray-dried soluble coffee particles and jet-milled, dried pressed roast coffee was loaded into the pressure vessel of Example 1 and subjected to the same heated pressurisation process. When the cooled vessel was de-pressurised and then inverted at the end of the pressurisation process, about 740g of particulate coffee product flowed out of the vessel and into the collection pot - more than 3 times the amount collected in Example 1 (without the addition of the jet-milled coffee). The remainder of the particles (about 260g) had adhered to the walls of the pressure vessel.

Of the 740g of particulate product that flowed out of the vessel, about 480g was in the form of a free-flowing powder, with the remainder comprising soft particle agglomerates, which could be comminuted into a powder by hand using gentle force. The 740g of particulate coffee that flowed out of the vessel contained a significant quantity of pressurised gas and generated a beverage foam layer when 3g of the coffee was reconstituted with 200 ml of hot water in a beaker.

### • Example 3

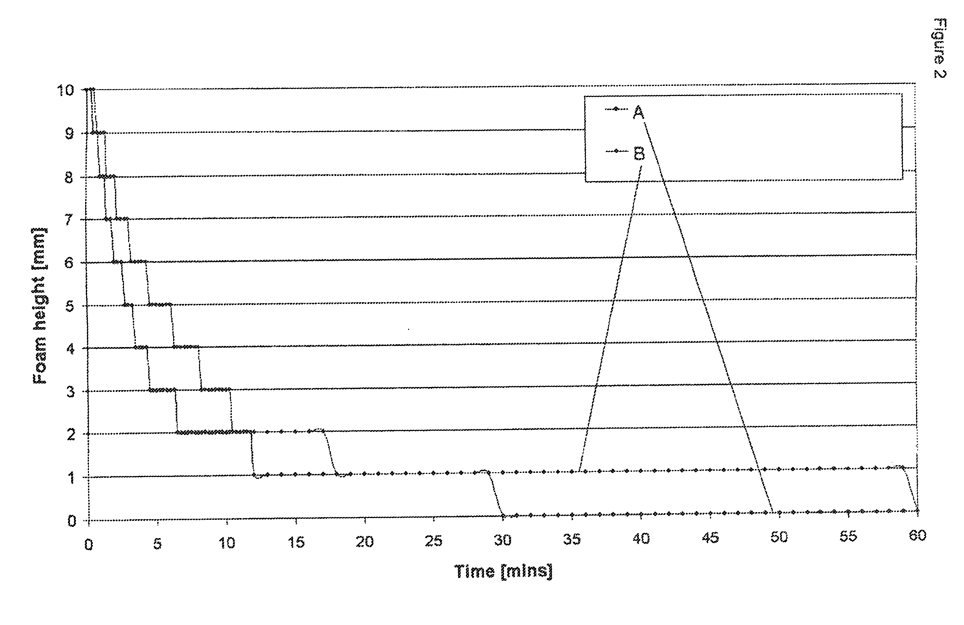

3g of product of Examples 1 and 2 were separately reconstituted in a beaker of approximately 65mm internal diameter, using hot water at about 85°C. The foam heights over time are shown in Figure 2. The control sample prepared in Example 1 is coded (A), the inventive sample prepared in Example 2 is coded (B).

The height of the top of the foam layer above the liquid/water interface was measured using a ruler both immediately after reconstitution, and at 1 minute intervals following reconstitution. Both samples had the same initial foam height of 10 mm. It was surprisingly found, however, that the foam generated by the product of Example 1 (A) was considerably less stable than the foam generated by the product of Example 2 (B). The foam generated by the product of Example 1 (A) had substantially disappeared from the surface after 30 minutes. By contrast, the foam of the product of Example 2 (B) took 60 minutes to substantially disappear. At each time interval, the foam height of the product of Example 2 (B) was the same or higher than the foam height of the product of Example 1 (A).

A further 3g of the treated coffee products of Examples 1 and 2 were separately reconstituted in 200 ml of hot water. The taste and character of the beverage products were assessed by a panel of 5 trained coffee tasters. The panel found the reconstituted coffee of Example 2 to have a significantly thicker foam mouthfeel than the product of Example 1.

Tests were performed on the coffee compositions at different stages of the above Examples and the results are set out in Table 1 below.

**Table 1**

| | Before pressurisation | | After pressurisation | |
|---|---|---|---|---|
| | Spray-Dried Soluble Coffee Powder before pressurisation treatment | Jet-milled Expeller cake | Pressurised Spray-Dried Soluble Coffee Powder | Pressurised Spray-Dried Soluble Coffee Powder + 15% Jet-milled expeller cake |
| Colour (reflected light intensity) | 28.0 La | 8.2 La | 15.5 La | 11.8 La |
| Density | 26.6 g/100cm³ | 36.8 g/100cm³ | 43.6 g/100cm³ | 44.1 g/100cm³ |
| Closed pore volume | 51.6% | n/a | 30.0% | 31.7% |
| Foam height | 2mm | n/a | 15mm | 15mm |

As can be seen from Table 1, the foaming level, density and closed pore volume remains substantially unchanged on the addition of the jet-milled expeller cake. Therefore, it can be seen that the final coffee product as a particle form closely resembles a conventional pressurised spray-dried instant foaming coffee (albeit slightly darker).

"Colour", in "La" units, means colour which is indirectly measured using visible light reflectance of a sample of the product, using a Dr. Lange Colour Reflectance Meter Model LK-100 with an internal 640 nm filter. (Dr. Lange GmbH, Düsseldorf, Germany). The sample is poured loosely into a petri dish in the levelling device supplied with the Dr. Lange reflectance meter. A handle is then manipulated to obtain a flat surface on the sample. The petri dish is then removed from the levelling device and placed in the drawer of the reflectance meter. The instrument is then activated and the reflectance measurement is displayed. The lower the reflectance value, the darker the colour.

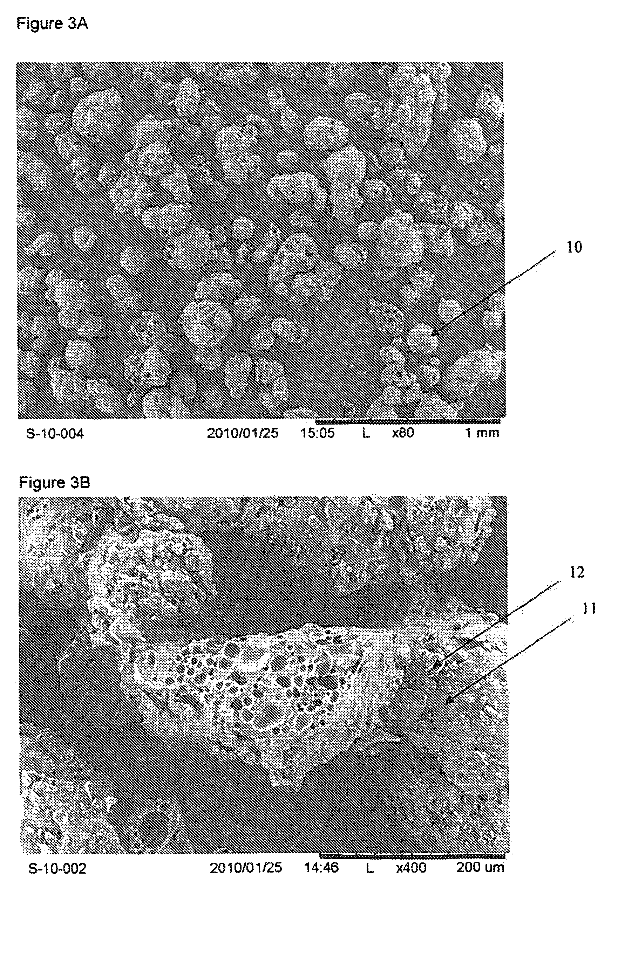

Figure 3A shows a scanning electron microscope image of an uncoated spray-dried instant espresso particle 10. Figure 3B shows a scanning electron microscope image of a pressurised spray-dried instant espresso particle 11 coated in accordance with the present disclosure with a finely-ground coffee material 12. The uncoated instant particles 10 generally have smooth outer surfaces. The coated particles 11 are less regular and have comparatively very fine particles of coffee material 12 adhered across the outer surfaces. One of the particles has been cut across in the centre of the picture and the otherwise-closed pore/void system can be clearly shown. These are the pores which hold pressurised gas in the coffee product.

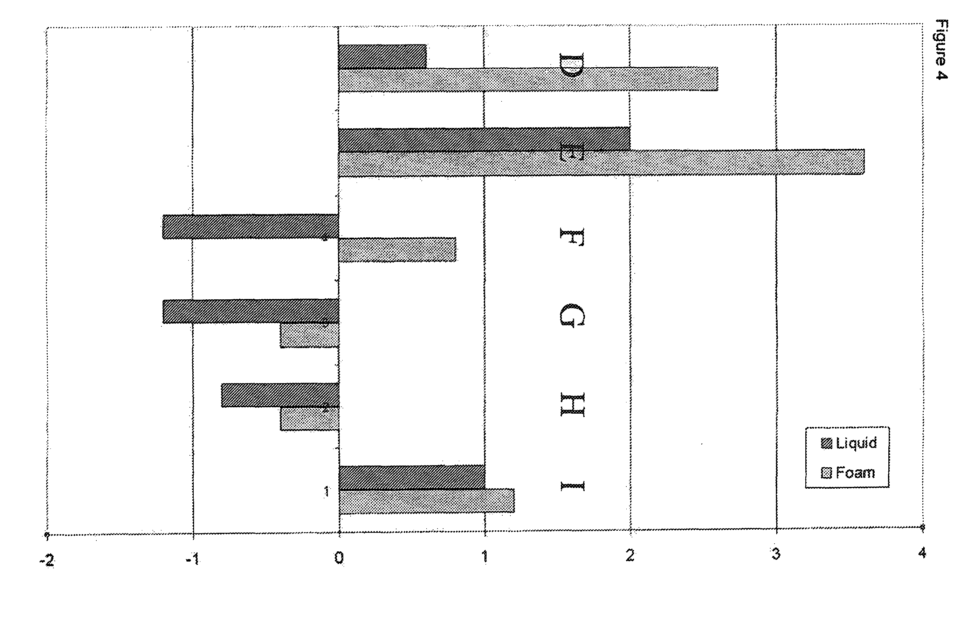

In addition, further results from taste tests performed on the beverage (liquid) and foam of a coffee made with the composition described herein in comparison to one made with an uncoated foaming instant espresso are shown in Figure 4.

In Figure 4 the letters refer to the following characteristics:
- D:: Thickness/viscosity
- E:: Chalky/powdery
- F:: Aroma impact
- G:: Sour
- H:: Bitter
- I:: Roasted

As shown in Figure 4, the scores provided by the five skilled tasters indicated that the beverage was found to be thicker and having a more chalky mouthfeel. In comparison to the body of the beverage, these features were especially pronounced in the foam. It is also noted that the aroma impact of the foam was significantly increased. Advantageously, the sour and bitter characteristics were reduced in the beverage made with the inventive composition. The inventors have found that while the liquid and foam show similar trends, the mouthfeel attributes of the foam are more prominently improved than in the bulk beverage (liquid), while the flavour attributes of the beverage are more improved than those of the foam.

Although preferred embodiments of the invention have been described herein in detail, it will be understood by those skilled in the art that variations may be made thereto without departing from the scope of the invention or of the appended claims.

## Claims

1. An instant coffee composition comprising soluble coffee particles having internal pores, wherein at least some of the internal pores contain a pressurised gas, and wherein the soluble coffee particles are provided with added finely-ground insoluble coffee material on an outer surface thereof, wherein the finely-ground insoluble coffee material has a mean particle size of from 0.1 to 100 micrometers.

2. An instant coffee composition according to claim 1, wherein the finely-ground insoluble coffee material:
(i) is derived from roast and ground coffee beans which have optionally already been extracted; and/or
(ii) has a mean particle size of from 5 to 50 micrometers; and/or
(iii) is at least partly fused into the outer surface of the soluble coffee particles.

3. A method of forming the instant coffee composition of claim 1 or claim 2, the method comprising;
a) providing a soluble coffee particle having an outer surface and internal pores;
b) at least partially coating the outer surface of the soluble coffee particle with an added finely-ground insoluble coffee material to form a coated particle, wherein the finely-ground insoluble coffee material has a mean particle size of from 0.1 to 100 micrometers; and
c) warming the coated particle and subjecting it to a pressurised gas so that at least some of the gas is trapped in said internal pores of the particle.

4. A method according to claim 3, wherein the soluble coffee particle is provided in a step of spray drying a coffee concentrate solution.

5. A method according to claim 3 or claim 4, wherein the finely-ground coffee material is dried before being coated onto the soluble coffee particle.

6. A method according to any of claims 3 to 5, wherein the method further comprises:
iv) cooling the coated particle and, optionally, packaging the particle.

7. A method according to any of claims 3 to 6, wherein the step of warming the coated particle involves heating the coated particle above the glass transition temperature of the soluble coffee particle.

8. A method according to any of the preceding claims, wherein in step ii) or step iii) the finely-ground insoluble coffee material is at least partially fused into the surface of the soluble coffee particle by warming said particle to a temperature equal to or above the glass transition temperature of said particle.

9. A method according to any of the preceding claims, wherein the pressurised gas:
A) comprises nitrogen and/or carbon dioxide, wherein the pressurised gas is optionally in a supercritical or liquefied state; and/or
B) is at a pressure of from 1,000 kPa to 50,000kPa.

10. A method of forming a beverage from an instant coffee composition comprising dissolving the instant coffee composition of any of claims 1 to 2 in an aqueous beverage medium.

11. A container comprising the foaming coffee composition of any of claims 1 to 2, the container being in the form of a cartridge, sachet, capsule, pod or pad.

12. A beverage dispensing system comprising a container according to claim 11 and a beverage dispensing machine adapted to receive the container and to dispense a beverage therefrom by the addition of an aqueous beverage medium.

13. A method of forming a beverage comprising passing an aqueous beverage medium through the container according to claim 11, optionally using the beverage dispensing system of claim 12.

## Patentansprüche

1. Instantkaffee-Zusammensetzung, welche lösliche Kaffeepartikel mit inneren Poren aufweisen, wobei zumindest einige der inneren Poren Druckgas enthalten, und wobei die löslichen Kaffeepartikel mit zugefügtem fein gemahlenem nicht löslichem Kaffeematerial auf ihrer Außenfläche versehen sind, wobei das fein gemahlene nicht lösliche Kaffeematerial eine durchschnittliche Partikelgröße von ab 0,1 bis 100 Mikrometern aufweist.

2. Instantkaffee-Zusammensetzung nach Anspruch 1, wobei das fein gemahlene nicht lösliche Kaffeematerial
(i) aus gerösteten und gemahlenen Kaffeebohnen erhalten wird, welche optional bereits extrahiert worden sind; und/oder
(ii) eine durchschnittliche Partikelgröße von ab 5 bis 50 Mikrometern aufweist; und/oder
(iii) zumindest teilweise in die Außenfläche der löslichen Kaffeepartikel eingeschmolzen ist.

3. Verfahren zur Herstellung der Instantkaffee-Zusammensetzung nach Anspruch 1 oder Anspruch 2, wobei das Verfahren die folgenden Schritte umfasst:
a) Bereitstellung eines löslichen Kaffeepartikels, welcher eine Außenfläche und innere Poren aufweist;
b) eine zumindest teilweise Beschichtung der Außenfläche des löslichen Kaffeepartikels mit einem zugefügten fein gemahlenen nicht löslichen Kaffeematerial zur Bildung eines beschichteten bzw. überzogenen Partikels, wobei das fein gemahlene nicht lösliche Kaffeematerial eine durchschnittliche Partikelgröße von ab 0,1 bis 100 Mikrometern aufweist; und
c) Erwärmung des beschichteten bzw. überzogenen Partikels und Beaufschlagung des Partikels mit Druckgas, so dass zumindest ein Teil des Gases in den inneren Poren des Partikels eingeschlossen wird.

4. Verfahren nach Anspruch 3, wobei der lösliche Kaffeepartikel in einem Schritt der Sprühtrocknung einer Kaffeekonzentrat-Lösung bereitgestellt wird.

5. Verfahren nach Anspruch 3 oder Anspruch 4, wobei das fein gemahlene Kaffeematerial getrocknet wird, bevor es auf den löslichen Kaffeepartikel aufgetragen wird.

6. Verfahren nach einem der Ansprüche 3 bis 5, wobei das Verfahren des Weiteren den folgenden Schritt umfasst:
iv) Kühlung des beschichteten bzw. überzogenen Partikels, und optional Verpackung des Partikels.

7. Verfahren nach einem der Ansprüche 3 bis 6, wobei der Schritt der Erwärmung des beschichteten bzw. überzogenen Partikels die Erwärmung des beschichteten bzw. überzogenen Partikels auf eine Temperatur über der Glasübergangstemperatur des löslichen Kaffeepartikels einschließt.

8. Verfahren nach einem der vorhergehenden Ansprüche, wobei in Schritt ii) oder Schritt iii) das fein gemahlene nicht lösliche Kaffeematerial zumindest teilweise in die Oberfläche des löslichen Kaffepartikels eingeschmolzen wird, indem der Partikel auf eine Temperatur gleich oder über der Glasübergangstemperatur des Partikels erwärmt wird.

9. Verfahren nach einem der vorhergehenden Ansprüche, wobei das Druckgas:
A) Stickstoff und/oder Kohlendioxid aufweist, wobei sich das Druckgas optional in einem überkritischen oder verflüssigten Zustand befindet; und/oder
B) einen Druck von ab 1,000 kPa bis 50,000 kPa aufweist.

10. Verfahren zur Herstellung eines Getränks aus einer Instantkaffee-Zusammensetzung, wobei das Verfahren die Auflösung der Instantkaffee-Zusammensetzung nach einem der Ansprüche 1 oder 2 in einem wässrigen Getränkemedium umfasst.

11. Behälter, welcher die schäumende Kaffeezusammensetzung nach einem der Ansprüche 1 oder 2 umfasst, wobei der Behälter die Form einer Patrone, eines Portionsbeutels, einer Kapsel, einer Hülse oder eines Kissens aufweist.

12. Getränkeausgabesystem, welches einen Behälter nach Anspruch 11 aufweist, sowie ein Getränkeausgabesystem, welches zur Aufnahme des Behälters und zur Ausgabe eines Getränks daraus durch Zugabe eines wässrigen Getränkemediums angepasst ist.

13. Verfahren zur Herstellung eines Getränks, welches die Durchleitung eines wässrigen Getränkemediums durch den Behälter nach Anspruch 11 umfasst, wobei optional das Getränkeausgabesystem nach Anspruch 12 verwendet wird.

## Revendications

1. Composition de café instantané comprenant des particules de café soluble ayant des pores internes, où au moins certains des pores internes contiennent un gaz sous pression, et où les particules de café soluble sont pourvues d'une matière de café insoluble finement moulue ajoutée sur une surface extérieure de celles-ci, où la matière de café insoluble finement moulue a une taille moyenne de particules allant de 0,1 à 100 micromètres.

2. Composition de café instantané selon la revendication 1, dans laquelle la matière de café insoluble finement moulue :
(i) est dérivée de grains de café torréfiés et moulus qui ont facultativement déjà été extraits ; et/ou
(ii) a une taille moyenne de particules allant de 5 à 50 micromètres ; et/ou
(iii) est au moins partiellement fusionnée dans la surface extérieure des particules de café soluble.

3. Procédé de formation de la composition de café instantané selon la revendication 1 ou 2, le procédé comprenant le fait :
a) de fournir une particule de café soluble ayant une surface extérieure et des pores internes ;
b) de revêtir au moins partiellement la surface extérieure de la particule de café soluble d'une matière de café insoluble finement moulue ajoutée pour former une particule revêtue, où la matière de café insoluble finement moulue a une taille moyenne de particules allant de 0,1 à 100 micromètres ; et
c) de chauffer la particule revêtue et de la soumettre à un gaz sous pression de sorte qu'au moins une partie du gaz soit piégée dans lesdits pores internes de la particule.

4. Procédé selon la revendication 3, dans lequel la particule de café soluble est fournie dans une étape de séchage par pulvérisation d'une solution de concentré de café.

5. Procédé selon la revendication 3 ou 4, dans lequel la matière de café finement moulue est séchée avant d'être appliquée sur la particule de café soluble.

6. Procédé selon l'une des revendications 3 à 5, dans lequel le procédé comprend en outre le fait :
iv) de refroidir la particule revêtue et, facultativement, de conditionner la particule.

7. Procédé selon l'une des revendications 3 à 6, dans lequel l'étape de chauffage de la particule revêtue consiste à chauffer la particule revêtue au-dessus de la température de transition vitreuse de la particule de café soluble.

8. Procédé selon l'une des revendications précédentes, dans lequel, dans l'étape ii) ou l'étape iii) la matière de café insoluble finement moulue est au moins partiellement fondue dans la surface de la particule de café soluble par chauffage de ladite particule à une température supérieure ou égale à la température de transition vitreuse de ladite particule.

9. Procédé selon l'une des revendications précédentes, dans lequel le gaz sous pression :
A) comprend de l'azote et/ou du dioxyde de carbone, où le gaz sous pression est facultativement dans un état supercritique ou liquéfié ; et/ou
B) est à une pression allant de 1000 kPa à 50000 kPa.

10. Procédé de formation d'une boisson à partir d'une composition de café instantané comprenant le fait de dissoudre la composition de café instantané de l'une des revendications 1 à 2 dans un milieu de boisson aqueuse.

11. Récipient comprenant la composition de café moussant de l'une des revendications 1 à 2, le récipient étant sous la forme d'une cartouche, d'un sachet, d'une capsule, d'une dosette ou d'une pastille.

12. Système de distribution de boisson comprenant un récipient selon la revendication 11 et une machine de distribution de boisson adaptée pour recevoir le récipient et pour distribuer une boisson à partir de celui-ci par l'ajout d'un milieu de boisson aqueuse.

13. Procédé de formation d'une boisson comprenant le fait de faire passer un milieu de boisson aqueuse à travers le récipient selon la revendication 11, facultativement en utilisant le système de distribution de boisson de la revendication 12.
